Europäisches Patentamt

European Patent Office

Office européen des brevets

(19)

(11) Publication number: 0 202 897
A2

(12) **EUROPEAN PATENT APPLICATION**

(21) Application number: 86303766.9

(22) Date of filing: 16.05.86

(51) Int. Cl.⁴: F 16 C 33/28
F 16 C 33/20

(30) Priority: 17.05.85 US 735884
26.06.85 US 749037

(43) Date of publication of application:
26.11.86 Bulletin 86/48

(84) Designated Contracting States:
AT BE CH DE FR GB IT LI NL SE

(71) Applicant: RAYCHEM CORPORATION
300 Constitution Drive
Menlo Park California 94025(US)

(72) Inventor: Moyer, James D.
51 N. Woodmont Drive
Downington Pennsylvania 19335(US)

(72) Inventor: Kite, Joseph S.
Rd. 1 Box 272
Glenmore Pennsylvania 19343(US)

(72) Inventor: Neuhauser, John K.
948 Broad Run Road Rd.4
West Chester Pennsylvania 19380(US)

(74) Representative: Hall, Robert Leonard et al,
Raychem Limited Intellectual Property Law Department
Swan House 37-39 High Holborn
London WC1(GB)

(54) Knit fabric bearing.

(57) This invention provides a fabric bearing wherein the fabric is a plated jersey knit fabric having a low friction fibre or yarn, such as polytetrafluoroethylene, exposed on the face of the fabric and a structural fibre or yarn, such as a polyester, exposed on the back of the fabric. To form a bearing for a rotating shaft the plated jersey knit fabric is preferably formed by circular knitting with the low friction fibre or yarn on the inside of the tubular fabric bearing and the structural fibre or yarn on the outside of the fabric bearing adapted for bonding to a rubber, plastic or metal support means by thermosetting or thermoplastic resin or by molding a rubber or plastic support means around the fabric bearing. To form a bearing for a sliding element the plated jersey knit fabric is preferably formed by circular knitting with the low friction fibre or yarn on the outside of the tubular fabric, the structural fibre or yarn on the inside of the fabric, then turning the tubular fabric inside out, preferably as it is knitted, to place the low friction face of the fabric on the inside of the tube.

FIG_3

EP 0 202 897 A2

## KNIT FABRIC BEARING

This invention relates to fabric bearings generally comprising a fabric bonded to a support means which is mounted on a machine.

Fabric bearings have been made from low friction fibers such a polytetrafluoroethylene. For example, in U.S. patent 2,804,886 (Re. 24,765) there is disclosed a cloth woven from a polytetrafluoroethylene fiber and a bondable yarn wherein the low friction fiber substantially forms the exposed bearing face and the bondable yarn forms the opposite side. U.S. patent 2,885,248 discloses a fabric bearing wherein the woven cloth is made entirely from polytetrafluoroethylene fibers. U.S. patent 4,107,381 also discloses a woven fabric sleeve for bearings wherein wide or flat ribbons of a low friction material such as polytetrafluoroethylene is used in the warp and polyester yarns are used in the fill to thereby expose more of the low friction yarns on the face of the bearing fabric and more of the structural yarns on the back of the bearing fabric sleeve.

Regardless of the weaving structure, the prior art woven fabric bearings have the disadvantage that the face of the bearing fabric always has a certain amount of the crossing fibers which are oriented basically perpendicular to the movement of the surface in contact with the face of the bearing fabric. For example, if polytetrafluoroethylene is used in the warp and a structural fiber is used in the fill of a woven bearing fabric, a certain number of the structural fibers of the fill will be exposed on the face of the fabric bearing and thus will be in contact with the surface carried by the bearing. This is illustrated in the '381 patent referenced above. An alternative proposed in the '248 patent referenced above of making the fabric entirely from a low friction material such as polytetrafluoroethylene has the same disadvantage of fibers in contact with the moving surface being oriented in the wrong direction, plus the disadvantage that the fabric as a whole is then difficult to bond to a support means.

In one aspect, this invention provides a fabric and a fabric bearing comprising a plated jersey knit fabric having a low friction fiber or yarn exposed on the face of the fabric and a structural fiber or yarn exposed on the back of the fabric.

In another aspect, this invention provides a bearing assembly comprising a plated jersey knit fabric having a low friction fiber or yarn exposed on the face of the fabric and a structural fiber or yarn exposed on the back of the fabric and a support means for said fabric, wherein the back of the fabric is attached to the support means.

In another aspect, this invention provides the above plated jersey knit fabric and fabric bearing wherein the low friction fiber or yarn is interrupted from one or more courses whereby that course or those courses contain the structural fiber or yarn. The course or courses where the low friction fiber or yarn is interrupted can alternate with a course or courses where both the low friction fiber or yarn and the structural fiber or yarn are present.

In another aspect, this invention provides a method of making a bearing fabric comprising jersey knitting a plated fabric from a low friction fiber or yarn which is exposed on the face of the fabric and a structural fiber or yarn which is exposed on the back of the fabric. This invention further provides a method of making a fabric bearing comprising attaching the back of said fabric to a support means.

Figure 1 shows the face of a fabric bearing according to an embodiment of this invention.

Figure 2 shows the back of a fabric bearing according to an embodiment of this invention.

Figure 3 shows a fabric bearing according to this invention wherein courses having the structural fiber or yarn alternate with courses having both the low friction fiber or yarn and the structural fiber or yarn present.

The fabric bearings of this invention are made by jersey or single knitting two fibers or yarns to form a plated fabric wherein one of the yarns is exposed on the face of the fabric and the other yarn is exposed on the back of the fabric. Plating has been conventionally used in the textile industry to produce knitted fabrics of two different colored yarns where one color will show on the face of the fabric and the other color appear on the back of the fabric.

Single knit or jersey knit plated fabric bearings according to this invention have superior properties due to the fact that the face yarn and the backing yarn are interlocked on every wale and every course. Bearing fabrics made by double knit, by tucking and floating or other methods do not have the degree of interlocking and consequently the stability and other properties provided by this invention.

Plated bearing fabrics may be made according to the present invention on a flat jersey knitter, but circular knitters are generally preferred in the present invention. The circular knitter generally produces a tighter, higher density knit which is preferred for bearing fabrics. In many applications it is preferred to circular knit the fabric, then split it to form a flat sheet of fabric when a flat bearing fabric is needed. The fibers or yarns can be knitted to any density and size of loops depending on the end use of the
bearing fabric, the materials used and the properties desired
in the bearing.  For many uses a density of about 20 to about
30 courses per inch may be used, however for heavy fabrics
about 5 to about 20 courses per inch may be used.  It is
generally preferred to use the tighter, higher density,
thinner jersey knit fabrics to give maximum stability in the
bearing.

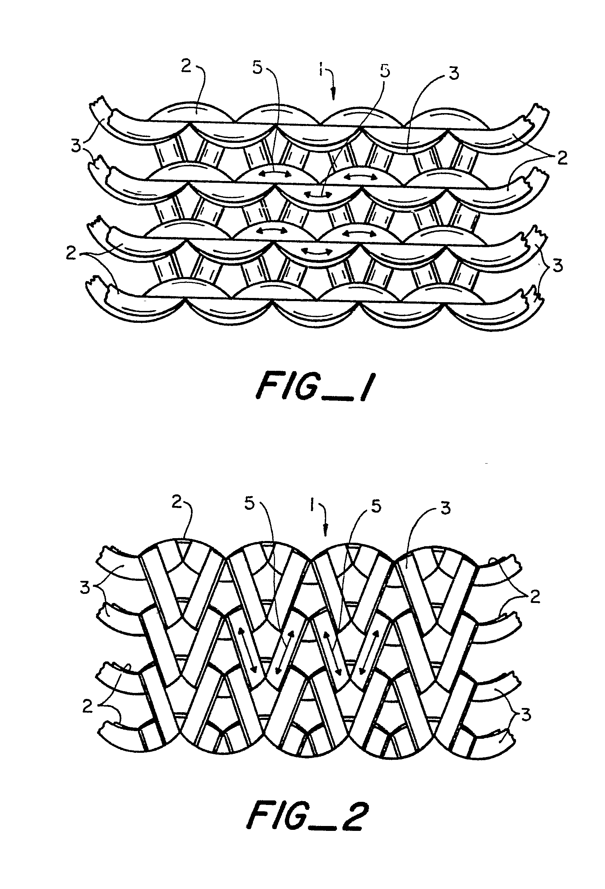

A preferred plated knit fabric according to this invention is illustrated in Figures 1 and 2.  Figure 1 shows the
face of the bearing fabric 1 wherein a low friction yarn 2 is
plated on a knitter with a structural yarn 3.  The low friction yarn forms essentially the entire surface of the face of
the bearing fabric with ribs or ridges running across the
fabric in a lateral direction.

Figure 2 shows the back of the same fabric wherein it
can be seen that the back of the fabric is the structural
yarn 3 wherein the surface of the back of the fabric is
comprised of portions of structural fabric 3 running substantially in a vertical or longitudinal direction.

When circular knitted in the tubular form, the fabric
depicted in Figures 1 and 2 is ideally suited as a bearing
for a rotating shaft wherein the surface of the sliding surface of the rotating shaft is in contact with the low friction yarn.  In particular the ribs of the low friction yarn
and the direction of movement of the surface of the rotating
shaft is essentially parallel to those portions of the low
friction yarn which form the tops of the ribs on the face of
the knit fabric bearing, as illustrated by arrows 5 in Figure
1.

A preferred bearing fabric comprises a 1200 denier polytetrafluoroethylene yarn ("Teflon" yarn from DuPont) and a 400 denier polyester yarn ("Dacron" from DuPont) knitted on a circular knitter at a density of 20 courses per inch and a diameter of 3/8 to 1 1/8 inch.

In another preferred embodiment of this invention, a bearing for a sliding element can be easily made by reversing the fibers or yarns plated in the fabric shown in Figures 1 and 2 whereby the low friction yarn is yarn 3 in the figures and the structural yarn is yarn 2 in the figures. This type of tubular fabric bearing can be knitted on the same circular knitter, then reversed or turned inside-out as it is knitted. The face inside of this tubular bearing fabric is the face shown in Figure 2, which will have the low friction yarn 3 on the inside face. The orientation of the portions of the low friction yarn which come in contact with the surface of the sliding element are essentially longitudinal and substantially aligned with the motion of the sliding element.

In another preferred embodiment of this invention, the low friction fiber or yarn is interrupted from one or more courses in the fabric whereby those courses contain the structural fiber or yarn. The course or courses where the low friction fiber or yarn is interrupted can alternate with courses where both the low friction fiber or yarn and the structural fiber or yarn are present. Some low friction yarns, for example polytetrafluoroethylene, are difficult to cut without fraying the fibers or yarn. It has been found that when the low friction yarn is periodically interrupted from a number of courses, such as about 2 to about 8 courses, then the structural fiber or yarn, such as a polyester, can be easily cut. In particular, the structural yarn present in those courses where the low friction yarn is interrupted can be prevented from fraying when cut and fused with a hot knife or an ultrasonic knife. One strand of the low friction fiber or yarn will extend across the courses where the low friction fiber or yarn is interrupted; when that single strand is cut the remainder of the low friction fiber or yarn remains interlocked with the structural fiber or yarn in those courses where both the low friction and structural yarns are present.

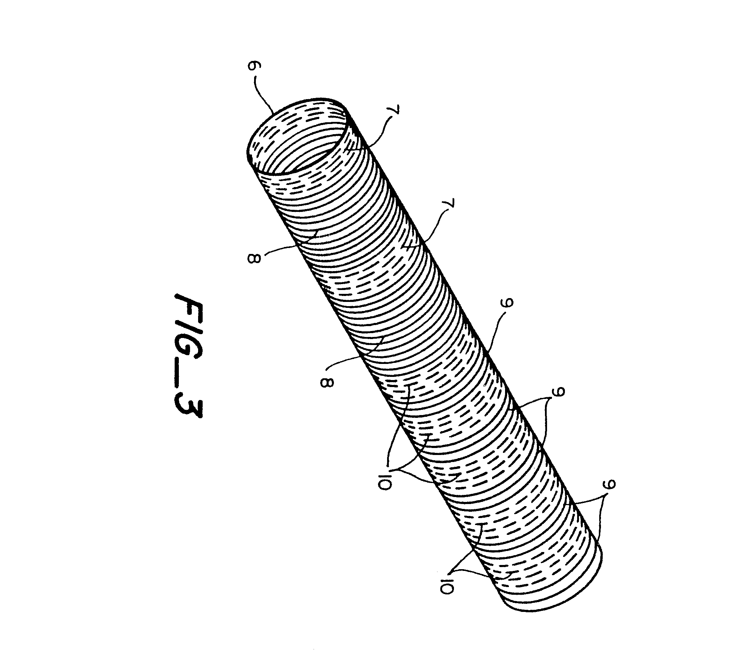

Examples of this embodiment are illustrated in Figure 3. Fabric 6, circular knitted according to this invention, illustrates one configuration of this embodiment wherein sections 8 in the fabric are courses knitted according to this invention and contain both low friction yarns and structural yarns. These sections 8 are the desired length for a bearing assembly and are separated by sections 7 which are four courses of structural yarn without the low friction yarn present. The circular knit fabric can be cut at sections 7 into lengths for individual bearings without disturbing or fraying the low friction yarns in sections 8, which remain fully interlocked in the structural yarns. In the second part of fabric 6 sections 9, which are three knitted courses containing both a low friction yarn and structural yarn, alternate with sections 10, which are four courses of structural yarn without the low friction yarn. It has been found that this type of knitted fabric functions well as a bearing surface and can be cut an any section 10 to any desired length while retaining the low friction yarns fully interlocked in the structural yarns. In this embodiment, the courses containing both the low friction yarn and the structural yarn form ribs which are higher than the courses where the low friction yarn is not present. This phenomenon causes the fabric in this embodiment to be particularly useful bearing assemblies.

In the above embodiments of this invention, whether the bearing is made for a rotating element or a sliding element, the structural yarn on the opposite side from the face of the bearing fabric is essentially formed in ribs of portions of the structural yarn which are aligned perpendicular to the movement of the rotating or sliding element. This characteristic aids in the bonding and retention of the bearing fabric in the support means.

The low friction fibers or yarns used in this invention may be organic, such as polyethylene, polypropylene and the like or inorganic, such as fiberglass. A preferred low friction material is polytetrafluoroethylene, such as "Teflon" from DuPont. The support fibers or yarns useful in this invention may be any yarn which has the structural strength required for supporting the low friction yarn and preferably which is easily bondable to the support means. Organic fibers or yarns such as polyesters, polyamides, and the like, or inorganic fibers, such as fiberglass, and the like, are useful as structural yarns in this invention. The size of the fibers or yarns used will depend on the intended end use of the bearing and the properties desired in the bearing. For many applications yarns in the range of about 220 to about 1200 denier or multiples thereof may be used.

The support means for fabric bearings are typically resilient materials such as rubber but can be rigid tubes or structures of plastic, metal and the like. The fabric bearing may be bonded to the support means by thermoplastic resins, thermosetting resins, adhesives or other means. Alternatively, the fabric bearing may be placed on a shape, such as a mandrel, and the support means molded around the bearing fabric and thereby bonded to the back of the bearing fabric. Such molding is typically done with rubber or plastic support means.

Due to the rib-type structure of the face of the fabric bearing made according to this invention, friction is reduced. The portions of the fibers or yarns forming the tops of the ribs are aligned substantially parallel with the direction of the movement of the surface of the rotating or sliding element supported by the bearing. The rib structure in the bearing made according to this invention provides interstices and channels for lubricants to be contained within the structure of the face of the fabric bearing.

From the above description of the plated knit bearing of the present invention, various modifications of the shape, form, materials and methods of application will be apparent to one skilled in the art. The scope of this invention is defined in the following claims.

CLAIMS

1. A fabric bearing comprising a plated jersey circular knit fabric having a low friction fiber or yarn exposed on the face of the fabric and a structural fiber or yarn exposed on the back of the fabric.

2. A fabric bearing according to claim 1 wherein the low friction fiber or yarn is interrupted from at least one course whereby that course or courses in the knit fabric contain the structural fiber or yarn and other courses in the knit fabric contain the low friction fiber or yarn and the structural fiber or yarn.

3. A fabric bearing according to claim 2 wherein the low friction fiber or yarn comprises a polyethylene.

4. A fabric bearing according to claim 3 wherein the low friction fiber or yarn is a polytetrafluoroethylene and the structural fiber or yarn is a polyester.

5. A fabric bearing according to claim 2 wherein the surface portions of the low friction fiber or yarn which are adapted for contact with a surface of a sliding element are approximately aligned with the intended direction of movement of the surface of the sliding element.

6. A bearing assembly comprising:

a plated jersey circular knit fabric having a low friction fiber or yarn exposed on the face of the fabric and a structural fiber or yarn exposed on the back of the fabric;

and a support means for said fabric; wherein the structural fiber or yarn exposed on the back of the fabric is attached to the support means.

7. A bearing assembly according to claim 6 wherein the low friction fiber or yarn comprises a polyethylene or a polytetrafluoroethylene and the structural fiber or yarn comprises a polyester, a polyamide or a fiberglass.

8. A bearing assembly according to claim 6 wherein the low friction fiber or yarn is interrupted from at least one course whereby that course or courses in the knit fabric contain the structural fiber or yarn and other courses in the knit fabric contain the low friction fiber or yarn and the structural fiber or yarn.

9. A method of making a fabric bearing comprising forming a jersey knitting a plated fabric on a circular knitter from a low friction fiber or yarn which is exposed on the face of the fabric and a structural fiber or yarn which is exposed on the back of the fabric.

10. A method according to claim 10 comprising alternately interrupting the low friction fiber or yarn from one or more courses and reinserting the low friction fiber or yarn in one or more courses whereby the resulting fabric contains a course or courses containing the structural fiber or yarn alternating with a course or courses containing the low friction fiber or yarn and the structural fiber or yarn.

0202897

1 / 2

FIG_1

FIG_2

FIG_3